# EUROPEAN PATENT SPECIFICATION

(11) **EP 3 018 749 B1**
(45) Date of publication and mention of the grant of the patent: **04.03.2020**
(21) Application number: 15193703.4
(22) Date of filing: 09.11.2015
(51) Int. Cl.: H01M 8/2475, C25D 11/24, B60L 50/71, C25D 11/02

(54) **FUEL CELL MODULE**
BRENNSTOFFZELLENMODUL
MODULE DE PILE À COMBUSTIBLE

(30) Priority: 10.11.2014 JP 2014228158
(43) Date of publication of application: 11.05.2016
(73) Proprietor: Toyota Jidosha Kabushiki Kaisha, Toyota-shi, Aichi-ken 471-8571 (JP)
(72) Inventor: Nishiumi, Hiroaki, Toyota-shi, Aichi-ken 471-8571 (JP); Mizuno, Seiji, Toyota-shi, Aichi-ken 471-8571 (JP)
(74) Representative: J A Kemp LLP

(56) References cited:
- JP-A- 2009 004 270
- US-A1- 2010 109 351

## Description

### BACKGROUND OF THE INVENTION

### 1. Field of the Invention

The invention relates to a fuel cell module.

### 2. Description of Related Art

US 2010/0109351 A describes a system for securing a cover having a first surface onto a chassis having a rim, the rim having a second surface. The system comprises a clamping rail and a fastener coupled to the rail. The clamping rail is configured to form a loop that circumferentially engages the first surface and the second surface and, when constricted, produces a first force substantially coplanar with the loop. The fastener is configured to constrict the rail, the rail and the first and second surfaces configured to produce a second force having a component substantially orthogonal to the loop when the rail is constricted. A fuel cell module includes a high-voltage portion that includes a fuel cell and a case that accommodates the high-voltage portion. Japanese Patent Application Publication No. 2009-004270 (JP 2009-004270 A) describes a structure in which another member is attached to a case via a seal member.

A technique is desired capable of suppressing the corrosion of a case caused by water remaining in a crevice between the case and a seal member. There is a possibility that, after water enters into a crevice (gap) between the case and the seal member, corrosion occurs in the case due to the water remaining in the crevice.

### SUMMARY OF THE INVENTION

The invention provides the fuel cell module capable of suppressing the corrosion of the case caused by the remaining water.

A first aspect of the invention relates to a fuel cell module as defined in appended claim 1. As a rust-proof treatment for aluminum or the aluminum alloy, the effect of an anodizing treatment is high. According to the above configuration, since the anodic oxide coating having rust resistance higher than those of aluminum and the aluminum alloy is formed on the surface that comes into contact with the gasket as a portion of the surface of the case in which water tends to remain, it is possible to suppress the corrosion of the case caused by the remaining water.

The case has a groove portion in which the gasket is fitted, and the anodic oxide coating is formed on at least a surface of the groove portion in the surface of the case. According to the above configuration, since the anodic oxide coating having the rust resistance higher than those of aluminum and the aluminum alloy is formed on the surface of the groove portion in which the gasket is fitted as the portion of the surface of the case in which water tends to remain, it is possible to suppress the corrosion of the case caused by the remaining water.

The case may have a press-fitting hole into which a press-fitting member formed of aluminum or aluminum alloy is press-fitted, and the anodic oxide coating may be formed on a surface of the press-fitting hole in the surface of the case. According to the above configuration, since the anodic oxide coating having the rust resistance higher than those of aluminum and the aluminum alloy is formed on the surface of the press-fitting hole as the portion of the surface of the case in which water tends to remain, it is possible to suppress the corrosion of the case caused by the remaining water. In addition, since the anodic oxide coating having wear resistance higher than those of aluminum and the aluminum alloy is formed on the surface of the press-fitting hole into which a member formed of the same material as that of the case is press-fitted, it is possible to suppress adhesive friction that tends to occur when one of members formed of the same material is press-fitted into the other member.

Sealing may be performed on the anodic oxide coating formed on the case. According to the above configuration, it is possible to improve the rust resistance of the surface on which the anodic oxide coating is formed. Consequently, it is possible to further suppress the corrosion of the case caused by remaining water.

The anodic oxide coating may be formed on at least a part of a surface inside the case. According to the above configuration, since the anodic oxide coating having an insulating property higher than those of aluminum and the aluminum alloy is formed on the surface inside the case, in the case where the high-voltage portion comes into contact with the surface on which the anodic oxide coating is formed inside the case, it is possible to prevent an electric leakage from the high-voltage portion to the case.

A second aspect of the invention relates to a fuel cell module as defined in appended claim 3. A third aspect of the invention relates to a vehicle including the fuel cell module according to the first and second aspect. The fuel cell module is provided below a floor portion of a vehicle body of the vehicle in a gravity direction. According to the above configuration, it is possible to prevent the corrosion of the case caused by remaining water in the fuel cell module disposed below the floor portion of the vehicle on which water tends to be splashed in the gravity direction.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is an explanatory view showing a schematic configuration of a vehicle;
FIG. 2 is a cross-sectional view showing a cross-sectional shape of the vehicle;
FIG. 3 is an explanatory view showing an external configuration of a fuel cell module;
FIG. 4 is a cross-sectional view of the fuel cell module;
FIG. 5 is a partially enlarged view of the fuel cell module;
FIG. 6 is an explanatory view showing a mount portion into which a mount member is press-fitted; and
FIG. 7 is an explanatory view showing a process in which the mount member is press-fitted into the mount portion.

### DETAILED DESCRIPTION OF EMBODIMENTS

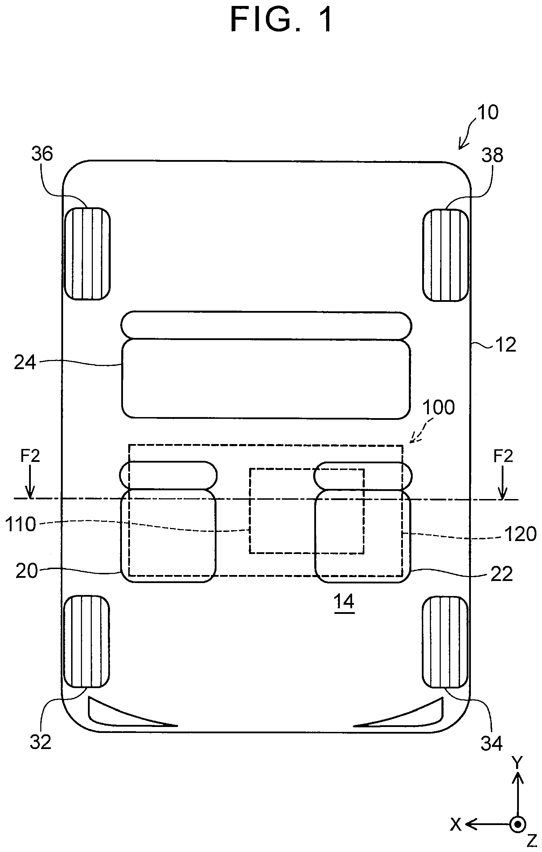

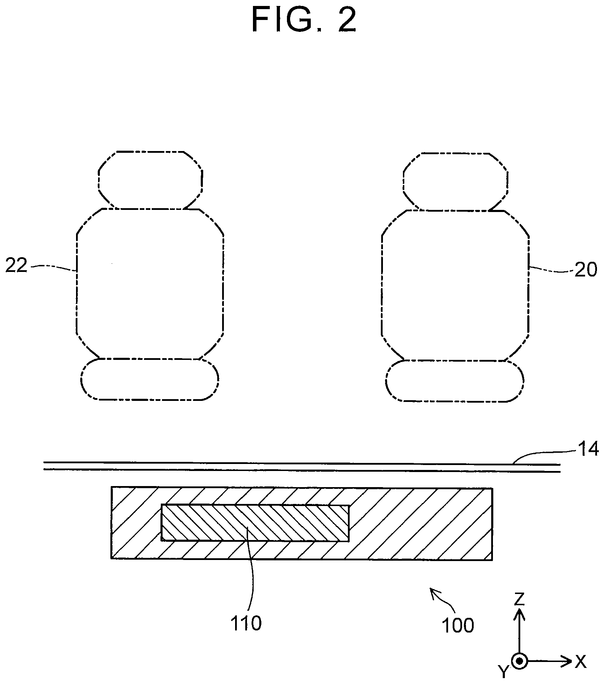

FIG. 1 is an explanatory view showing a schematic configuration of a vehicle 10. FIG. 2 is a cross-sectional view showing a cross-sectional shape of the vehicle 10. FIG. 2 shows the cross section of the vehicle 10 as viewed from F2-F2 indicated by arrows in FIG. 1. FIG. 1 shows an X axis, a Y axis, and a Z axis that are orthogonal to each other. The X axis in FIG. 1 is a coordinate axis that extends from the left side of the vehicle 10 to the right side of the vehicle 10 when the vehicle 10 is viewed from the rear. The Y axis in FIG. 1 is a coordinate axis that extends from the front of the vehicle 10 to the rear of the vehicle 10. The Z axis in FIG. 1 is a coordinate axis that extend upward in a gravity direction. The X axis, the Y axis, and the Z axis in FIG. 1 correspond to the X axis, the Y axis, and the Z axis in the other drawings.

The vehicle 10 includes a vehicle body 12 and a fuel cell module 100. The vehicle 10 runs by using electric power generated in the fuel cell module 100.

The vehicle body 12 of the vehicle 10 constitutes an outer shell of the vehicle 10. The vehicle body 12 is provided with seats 20, 22, and 24 and wheels 32, 34, 36, and 38.

The seats 20, 22, and 24 are configured such that a passenger can be seated in them. The seat 20 is positioned on the right side (a side in a +X axis direction) of the vehicle body 12. The seat 22 is positioned on the left side (a side in a -X axis direction) of the vehicle body 12. The seat 24 is positioned at the rear of the seat 20 and the seat 22 (a side in a +Y axis direction).

The wheels 32, 34, 36, and 38 are driven with the electric power generated in the fuel cell module 100. In another embodiment, the drive wheels of the vehicle 10 may be only the wheels 32 and 34 positioned in the front or may also be only the wheels 36 and 38 positioned in the rear.

The vehicle body 12 of the vehicle 10 includes a floor portion 14 formed by molding a thin plate. The fuel cell module 100 is provided below the floor portion 14 in the gravity direction (a side in a -Z axis direction).

The fuel cell module 100 of the vehicle 10 is a device in which a fuel cell stack 110 is accommodated. The fuel cell stack 110 has a stack structure in which a plurality of cells that generate electric power by using an electrochemical reaction of a reactive gas are stacked. In the embodiment, the fuel cell stack 110 receives supply of a hydrogen gas and air, and generates electric power by using the electrochemical reaction of hydrogen and oxygen. In the embodiment, the fuel cell module 100 includes various auxiliary devices for supplying hydrogen and air to the fuel cell stack 110 in addition to the fuel cell stack 110.

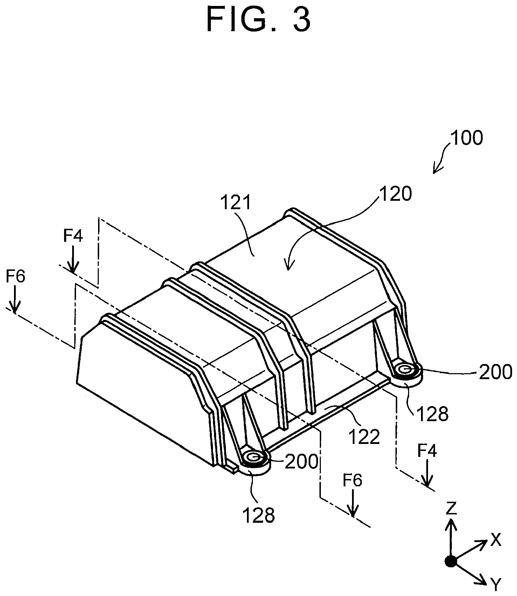

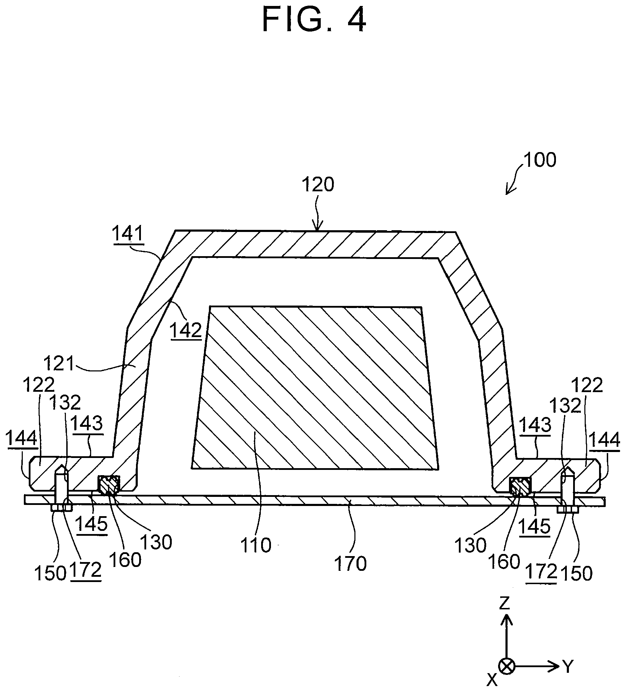

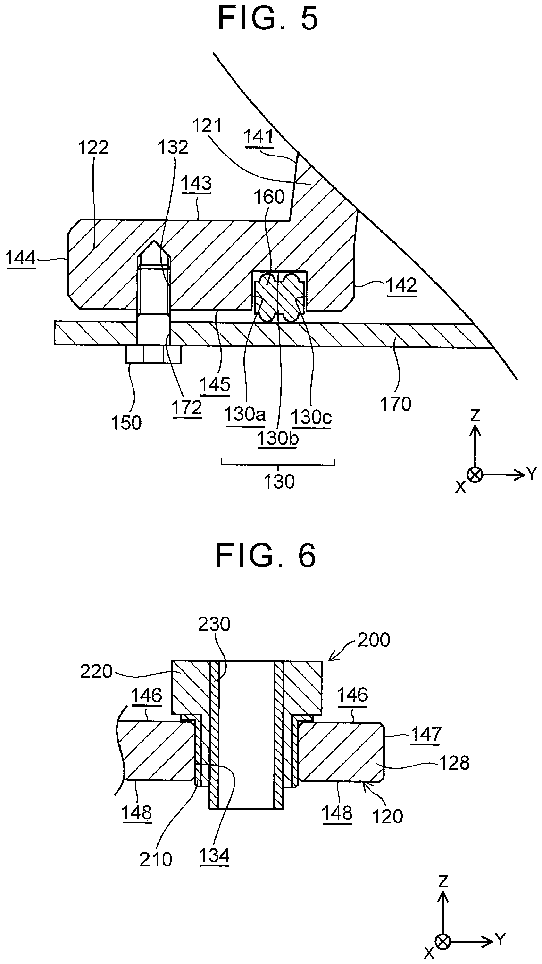

FIG. 3 is an explanatory view showing an external configuration of the fuel cell module 100. FIG. 4 is a cross-sectional view of the fuel cell module 100. FIG. 4 shows the cross section of the fuel cell module 100 as viewed from F4-F4 indicated by arrows in FIG. 3. FIG. 5 is a partially enlarged view of the fuel cell module 100.

The fuel cell module 100 includes a case 120, bolts 150, gaskets 160, a cover 170, and mount members 200.

The case 120 of the fuel cell module 100 accommodates at least a part of a high-voltage portion including the fuel cell stack 110. In the embodiment, the case 120 accommodates the entire fuel cell stack 110. In another embodiment, the case 120 may accommodate the high-voltage portion different from the fuel cell stack 110 (e.g., a relay or a bus bar). In the embodiment, the case 120 is formed of an aluminum alloy. In another embodiment, the case 120 may be formed of aluminum.

The case 120 includes a case main body 121, flange portions 122, and mount portions 128.

The case main body 121 of the case 120 is a box-shaped portion having an opening portion in the -Z axis direction. The fuel cell stack 110 is accommodated in the case main body 121. The case main body 121 has a surface 141 and a surface 142. The surface 141 of the case main body 121 is the surface that faces the outside of the case 120. The surface 142 of the case main body 121 is the surface that faces the inside of the case 120. In the embodiment, an anodic oxide coating is formed (anodizing is performed) on each of the surfaces 141 and 142 of the case main body 121. In another embodiment, the anodic oxide coating may not be formed on each of the surfaces 141 and 142 of the case main body 121.

Each flange portion 122 of the case 120 is the portion that protrudes to the outer side along a Y axis direction from an end portion of the case main body 121 in the -Z axis direction. The flange portion 122 has a surface 143, a surface 144, and a surface 145. The surface 143 of the flange portion 122 is the surface that faces in a +Z axis direction. The surface 144 of the flange portion 122 is the surface that faces in the +Y axis direction on the side in the +Y axis direction, and is the surface that faces in a -Y axis direction on a side in the -Y axis direction. The surface 145 of the flange portion 122 is the surface that faces in the -Z axis direction. In the embodiment, the anodic oxide coating is formed on each of the surfaces 143, 144, and 145 of the flange portion 122. In another embodiment, the anodic oxide coating may not be formed on each of the surfaces 143, 144, and 145 of the flange portion 122.

In the flange portion 122, a groove portion 130 is formed. The groove portion 130 of the flange portion 122 is depressed in the +Z axis direction, from the surface 145. The gasket 160 is fitted in the groove portion 130. The anodic oxide coating is formed on a surface that comes into contact with the gasket 160 in the surface of the groove portion 130. In the embodiment, sealing is performed on the anodic oxide coating formed on the groove portion 130.

In the embodiment, the groove portion 130 has a surface 130a, a surface 130b, and a surface 130c. The surface 130b of the groove portion 130 is the surface that faces in the -Z axis direction, and the surface 130a and the surface 130c are the surfaces that face in the Y axis direction and oppose each other. In the embodiment, the anodic oxide coating is formed on each of the surfaces 130a, 130b, and 130c of the groove portion 130. In another embodiment, the groove portion 130 may be constituted by two surfaces or four or more surfaces, and may include a curved surface in at least a part of the groove portion 130.

In the flange portion 122, a female thread portion 132 is formed. The female thread portion 132 is formed in the +Z axis direction, from the surface 145. The female thread portion 132 is configured to be capable of being screwed with the bolt 150. In the embodiment, the anodic oxide coating is not formed on the surface of the female thread portion 132. In another embodiment, the anodic oxide coating may be formed on the surface of the female thread portion 132.

The bolt 150 of the fuel cell module 100 is configured to be capable of being screwed with the female thread portion 132. In the embodiment, the bolt 150 is formed of an aluminum alloy. In another embodiment, the bolt 150 may be formed of aluminum.

The gasket 160 of the fuel cell module 100 is a seal member that is sandwiched between the case 120 and the cover 170. A space between the case 120 and the cover 170 is sealed by the gasket 160. In the embodiment, the gasket 160 is shaped so as to be fitted in the groove portion 130. In the embodiment, the gasket 160 has protruding portions arranged in two rows that protrude toward the groove portion 130, and protruding portions arranged in two rows that protrude toward the cover 170. In the embodiment, the gasket 160 is formed of rubber having an insulating property and elasticity (e.g., silicone rubber or fluoro rubber).

The cover 170 of the fuel cell module 100 is shaped so as to cover the opening portion of the case 120. The cover 170 accommodates the fuel cell stack 110 with the case 120. The cover 170 is another part (component) different from the case 120. In the embodiment, the cover 170 has though holes 172 through which the bolts 150 pass. In the embodiment, the cover 170 is fixed to the case 120 by fitting the bolt 150 in the female thread portion 132 of the case 120 through the through hole 172. In the embodiment, the cover 170 is formed of an iron alloy.

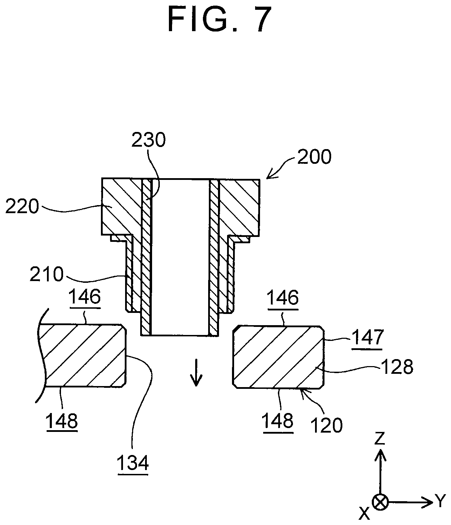

FIG. 6 is an explanatory view showing the mount portion 128 into which the mount member 200 is press-fitted. FIG. 7 is an explanatory view showing a process in which the mount member 200 is press-fitted into the mount portion 128. Each of FIGS. 6 and 7 shows a cross section of the mount portion 128 as viewed from F6-F6 indicated by arrows in FIG. 3.

The mount portion 128 of the case 120 is provided at an outer edge of the case 120. The mount portion 128 has a press-fitting hole 134. Into the press-fitting hole 134, the mount member 200 for fastening the fuel cell module 100 to the vehicle body 12 is press-fitted. In the embodiment, two mount portions 128 are provided on the side of the outer edge of the case 120 in the +Y axis direction, and one mount portion 128 is provided on the side of the outer edge of the case 120 in the -Y axis direction (not shown).

The mount portion 128 has a surface 146, a surface 147, and a surface 148. The surface 146 of the mount portion 128 is the surface that faces in the +Z axis direction. The surface 147 of the mount portion 128 is the surface along the Z axis. The surface 148 of the mount portion 128 is the surface that faces in the -Z axis direction. In the embodiment, the anodic oxide coating is formed on each of the surfaces 146, 147, and 148 of the mount portion 128. In another embodiment, the anodic oxide coating may not be formed on each of the surfaces 146, 147, and 148 of the mount portion 128.

In the embodiment, the anodic oxide coating is formed on the surface of the press-fitting hole 134. In the embodiment, the sealing is performed on the anodic oxide coating formed on the press-fitting hole 134.

The mount member 200 of the fuel cell module 100 is configured to be capable of being press-fitted into the press-fitting hole 134. The mount member 200 includes an outer tube portion 210, an elastic tube portion 220, and an inner tube portion 230.

The outer tube portion 210 of the mount member 200 is a tubular member. The outer tube portion 210 comes into contact with the surface of the press-fitting hole 134. The outer tube portion 210 is formed of an aluminum alloy. In another embodiment, the outer tube portion 210 may be formed of aluminum.

The elastic tube portion 220 of the mount member 200 is a tubular member having an electrical insulating property. The elastic tube portion 220 is fitted in between the outer tube portion 210 and the inner tube portion 230. In the embodiment, the elastic tube portion 220 is formed of rubber.

The inner tube portion 230 of the mount member 200 is a tubular member. The inner tube portion 230 is press-fitted inside the elastic tube portion 220. In the embodiment, the inner tube portion 230 is formed of an aluminum alloy.

According to the embodiment described thus far, since the anodic oxide coating having rust resistance higher than those of aluminum and the aluminum alloy is formed on the surface that comes into contact with the gasket 160 as the portion of the surface of the case 120 in which water tends to remain, it is possible to suppress the corrosion of the case 120 caused by the remaining water.

In addition, since the anodic oxide coating having the rust resistance higher than those of aluminum and the aluminum alloy is formed on each of the surfaces 130a, 130b, and 130c of the groove portion 130 in which the gasket 160 is fitted as the portions of the surface of the case 120 in which water tends to remain, it is possible to suppress the corrosion of the case 120 caused by the remaining water.

Further, since the anodic oxide coating having the rust resistance higher than those of aluminum and the aluminum alloy is formed on the surface of the press-fitting hole 134 as the portion of the surface of the case 120 in which water tends to remain, it is possible to suppress the corrosion of the case 120 caused by the remaining water. Furthermore, since the anodic oxide coating having wear resistance higher than those of aluminum and the aluminum alloy is formed on the surface of the press-fitting hole 134 into which the outer tube portion 210 of the mount member 200 formed of the same material as that of the case 120 is press-fitted, it is possible to suppress adhesive friction that tends to occur when one of members formed of the same material is press-fitted into the other member.

Moreover, since the sealing is performed on the anodic oxide coating formed on the case 120, it is possible to improve the rust resistance of the surface on which the anodic oxide coating is formed. Consequently, it is possible to further suppress the corrosion of the case 120 caused by the remaining water.

In addition, since the anodic oxide coating having the insulating property higher than those of aluminum and the aluminum alloy is formed on the surface 142 inside the case 120, in the case where the high-voltage portion comes into contact with the surface 142 on which the anodic oxide coating is formed inside the case 120, it is possible to prevent an electric leakage from the high-voltage portion to the case 120.

Further, it is possible to prevent the corrosion of the case 120 caused by remaining water in the fuel cell module 100 disposed below the floor portion 14 of the vehicle 10, on which water tends to be splashed, in the gravity direction.

The invention is not limited to the embodiments described above, and the invention can be implemented in various configurations without departing from the scope thereof. For example, the technical features in the embodiments corresponding to the technical features of the invention can be appropriately replaced or combined in order to solve a part or all of the above problems or achieve a part or all of the above effects. In addition, any of the technical features, if not explained as essential in the specification, may be deleted as appropriate.

The surface of the case 120 on which the anodic oxide coating is formed may be at least the surface of the case 120 that comes into contact with the gasket 160, and may also be the entire surface of the case 120 or a part of the surface of the case 120. The portion at which the gasket 160 is disposed is not limited to the groove portion 130, and may also be disposed on the surface 145 of the flange portion 122.

## Claims

1. A fuel cell module disposed below a floor of a vehicle (10), the fuel cell module comprising:
a high-voltage portion including a fuel cell (110);
a case (120) that is formed of aluminum or aluminum alloy and that accommodates at least a part of the high-voltage portion; and
a gasket (160) sandwiched between the case (120) and another component (170), which is different from the case (120), **characterized in that**:
an anodic oxide coating is formed on at least a surface that comes into contact with the gasket (160) in a surface of the case (120); wherein:
the case (120) has a groove portion (130) in which the gasket (160) is fitted; and
the anodic oxide coating is formed on at least a surface (130a, 130b, 130c) of the groove portion (130) in the surface of the case (120).

2. The fuel cell module according to claim 1, wherein:
the case (120) has a press-fitting hole (134) into which a press-fitting member (200) formed of aluminum or aluminum alloy is press-fitted; and
the anodic oxide coating is formed on a surface of the press-fitting hole (134) in the surface of the case (120).

3. A fuel cell module disposed below a floor of a vehicle (10), the fuel cell module comprising:
a high-voltage portion including a fuel cell (110);
a case (120) that is formed of aluminum or aluminum alloy and that accommodates at least a part of the high-voltage portion; and
a gasket (160) sandwiched between the case (120) and another component (170), which is different from the case (120), **characterized in that**:
an anodic oxide coating is formed on at least a surface that comes into contact with the gasket (160) in a surface of the case (120); wherein:
the case (120) has a press-fitting hole (134) into which a press-fitting member (200) formed of aluminum or aluminum alloy is press-fitted; and
the anodic oxide coating is formed on a surface of the press-fitting hole (134) in the surface of the case (120).

4. The fuel cell module according to any one of claims 1 to 3, wherein sealing is performed on the anodic oxide coating formed on the case (120).

5. The fuel cell module according to any one of claims 1 to 4, wherein the anodic oxide coating is formed on at least a part of a surface (142) inside the case (120).

6. A vehicle **characterized by** comprising the fuel cell module according to any one of claims 1 to 5, wherein
the fuel cell module is provided below a floor portion (14) of a vehicle body (12) of the vehicle (10) in a gravity direction.

## Patentansprüche

1. Brennstoffzellenmodul, das unter einem Boden eines Fahrzeugs (10) angeordnet ist, wobei das Brennstoffzellenmodul Folgendes umfasst:
einen Hochspannungsabschnitt, der eine Brennstoffzelle (110) beinhaltet;
ein Gehäuse (120), das aus Aluminium oder Aluminiumlegierung gebildet ist und das mindestens einen Teil des Hochspannungsabschnitts aufnimmt; und
eine Dichtung (160), die zwischen dem Gehäuse (120) und einer anderen Komponente (170), die sich von dem Gehäuse (120) unterscheidet, eingelegt ist, **dadurch gekennzeichnet, dass**:
eine anodische Oxidbeschichtung auf mindestens einer Oberfläche gebildet ist, die in Kontakt mit der Dichtung (160) in einer Oberfläche des Gehäuses (120) kommt, wobei:
das Gehäuse (120) einen Nutenabschnitt (130) hat, in den die Dichtung (160) eingebaut ist; und
die anodische Oxidbeschichtung auf mindestens einer Oberfläche (130a, 130b, 130c) des Nutenabschnitts (130) in der Oberfläche des Gehäuses (120) gebildet ist.

2. Brennstoffzellenmodul nach Anspruch 1, wobei:
das Gehäuse (120) ein Einpressloch (134) hat, in das ein Einpresselement (200), das aus Aluminium oder Aluminiumlegierung gebildet ist, eingepresst ist; und
die anodische Oxidbeschichtung auf einer Oberfläche des Einpresslochs (134) in der Oberfläche des Gehäuses (120) gebildet ist.

3. Brennstoffzellenmodul, das unter einem Boden eines Fahrzeugs (10) angeordnet ist, wobei das Brennstoffzellenmodul Folgendes umfasst:
einen Hochspannungsabschnitt, der eine Brennstoffzelle (110) beinhaltet;
ein Gehäuse (120), das aus Aluminium oder Aluminiumlegierung gebildet ist und das mindestens einen Teil des Hochspannungsabschnitts aufnimmt; und
eine Dichtung (160), die zwischen dem Gehäuse (120) und einer anderen Komponente (170), die sich von dem Gehäuse (120) unterscheidet, eingelegt ist, **dadurch gekennzeichnet, dass**:
eine anodische Oxidbeschichtung auf mindestens einer Oberfläche gebildet ist, die in Kontakt mit der Dichtung (160) in einer Oberfläche des Gehäuses (120) kommt, wobei:
das Gehäuse (120) ein Einpressloch (134) hat, in das ein Einpresselement (200), das aus Aluminium oder Aluminiumlegierung gebildet ist, eingepresst ist; und
die anodische Oxidbeschichtung auf einer Oberfläche des Einpresslochs (134) in der Oberfläche des Gehäuses (120) gebildet ist.

4. Brennstoffzellenmodul nach einem der Ansprüche 1 bis 3, wobei ein Abdichten an der anodischen Oxidbeschichtung, die auf dem Gehäuse (120) gebildet ist, durchgeführt wird.

5. Brennstoffzellenmodul nach einem der Ansprüche 1 bis 4, wobei die anodische Oxidbeschichtung auf mindestens einem Teil einer Oberfläche (142) innerhalb des Gehäuses (120) gebildet ist.

6. Fahrzeug, **gekennzeichnet durch** Umfassen des Brennstoffzellenmoduls nach einem der Ansprüche 1 bis 5, wobei
das Brennstoffzellenmodul unter einem Bodenabschnitt (14) einer Fahrzeugkarosserie (12) des Fahrzeugs (10) in einer Schwerkraftrichtung bereitgestellt ist.

## Revendications

1. Module de pile à combustible disposé sous un plancher d'un véhicule (10), le module de pile à combustible comprenant :
une partie haute tension comprenant une pile à combustible (110) ;
un boîtier (120) qui est formé d'aluminium ou d'alliage d'aluminium et qui contient au moins une partie de la partie haute tension ; et
une garniture (160) prise en sandwich entre le boîtier (120) et un autre composant (170), qui est différent du boîtier (120), **caractérisé en ce que** :
un revêtement d'oxyde anodique est formé sur au moins une surface qui entre en contact avec la garniture (160) dans une surface du boîtier (120) ; dans lequel :
le boîtier (120) a une partie de rainure (130) dans laquelle la garniture (160) est ajustée ; et
le revêtement d'oxyde anodique est formé sur au moins une surface (130a, 130b, 130c) de la partie de rainure (130) dans la surface du boîtier (120).

2. Module de pile à combustible selon la revendication 1, dans lequel :
le boîtier (120) a un trou d'ajustement à pression (134) dans lequel un élément d'ajustement à pression (200) formé d'aluminium ou d'alliage d'aluminium est ajusté par pression ; et
le revêtement d'oxyde anodique est formé sur une surface du trou d'ajustement à pression (134) dans la surface du boîtier (120).

3. Module de pile à combustible disposé sous un plancher d'un véhicule (10), le module de pile à combustible comprenant :
une partie haute tension comprenant une pile à combustible (110) ;
un boîtier (120) qui est formé d'aluminium ou d'alliage d'aluminium et qui contient au moins une partie de la partie haute tension ; et
une garniture (160) prise en sandwich entre le boîtier (120) et un autre composant (170), qui est différent du boîtier (120), **caractérisé en ce que** :
un revêtement d'oxyde anodique est formé sur au moins une surface qui entre en contact avec la garniture (160) dans une surface du boîtier (120) ; dans lequel :
le boîtier (120) a un trou d'ajustement à pression (134) dans lequel un élément d'ajustement à pression (200) formé d'aluminium ou d'alliage d'aluminium est ajusté par pression ; et
le revêtement d'oxyde anodique est formé sur une surface du trou d'ajustement à pression (134) dans la surface du boîtier (120).

4. Module de pile à combustible selon l'une quelconque des revendications 1 à 3, dans lequel l'étanchéité est réalisée sur le revêtement d'oxyde anodique formé sur le boîtier (120).

5. Module de pile à combustible selon l'une quelconque des revendications 1 à 4, dans lequel le revêtement d'oxyde anodique est formé sur au moins une partie d'une surface (142) à l'intérieur du boîtier (120).

6. Véhicule **caractérisé en ce qu'**il comprend le module de pile à combustible selon l'une quelconque des revendications 1 à 5, dans lequel
le module de pile à combustible est prévu sous une partie de plancher (14) d'une carrosserie de véhicule (12) du véhicule (10) dans une direction de la gravité.
